Europäisches Patentamt

European Patent Office

Office européen des brevets

(11) Publication number: **0 091 251**

A2

(12) **EUROPEAN PATENT APPLICATION**

(21) Application number: **83301708.0**

(22) Date of filing: **25.03.83**

(51) Int. Cl.³: **F 16 H 1/00**

(30) Priority: **02.04.82 GB 8209817**

(43) Date of publication of application:
**12.10.83 Bulletin 83/41**

(84) Designated Contracting States:
**AT BE CH DE FR GB IT LI LU NL SE**

(71) Applicant: **F.G. Kaye & Son Limited**
**2 Kingsmead Ollerton Road**
**Retford Nottinghamshire DN22 7FD(GB)**

(72) Inventor: **Kaye, Frederick Geoffrey**
**2 Kingsmead Ollerton Road**
**Retford Nottinghamshire DN22 7FD(GB)**

(74) Representative: **Spoor, Brian et al,**
**c/o E.N. LEWIS & TAYLOR 144 New Walk**
**Leicester, LE1 7JA(GB)**

(54) **Power transmission joint.**

(57) A first bevel gear (11), which forms a power input of the transmission joint, and a second bevel gear (14) are meshed with a third bevel gear (20) whose rotation axis (21) is perpendicular to those (12,16) of both the first and second gears (11,14). A fourth bevel gear (15) which is drivingly connected to the second gear (14) and a fifth bevel gear (18) which forms a power output of the transmission joint are similarly meshed with a sixth bevel gear (22) whose rotation axis (23) is perpendicular to those (16,19) of both the fourth and fifth gears (15,18). The second and fourth gears (14,15) are mounted on a common support (32) for rotation in unison about a common axis (16), while the first gear (11) is rotatably mounted on a support (32) which can be moved angularly relative to the common support (32) about the rotation axis (21) of the third gear (20), and the fifth gear (18) is rotatably mounted on a support (39) which can be moved angularly relative to the common support (32) abyut the rotation axis (23) of the sixth gear (22), these two rotation axes (21,23) being oriented at right angles to one another so as to enable the power output to be moved angularly in a universal manner relative to the power input.

FIG.I.

TITLE: Power Transmission Joint

This invention relates to a power transmission joint wherein the angle between the power input and power output axes can be varied.

Power transmission joints of this type are disclosed, for example, in UK Patents Nos. 344622 and 758456 which comprise first and second rotatable elements which are relatively angularly movable about a pivot axis perpendicular to both of their rotation axes and which are both in driving engagement with a third element rotatable about said pivot axes, and fourth and fifth rotatable elements which are relatively angularly movable about a further pivot axis perpendicular to both of their rotation axes and which are both in driving engagement with a sixth element rotatable about said further pivot axis. The first and fifth rotatable elements form respectively a power input and a power output of the transmission joint, while the second and fourth rotatable elements are drivingly connected together.

Although these conventional power transmission joints enable the power output to be set at any desired angle relative to the power input, they are complicated in construction and also bulky. It is an object of the present invention to provide an improved power transmission joint which overcomes these defects.

According to the present invention, in a power transmission joint of the above-described type the second and fourth rotatable elements are mounted on a common support for rotation in unison about a common axis, and the two pivot axes are oriented generally perpendicularly to one another.

In this way, a compact construction can be attained because a common support is employed for both of the second and fourth rotatable elements, while universal angular movement of the power output relative to the power input is facilitated by the fact that the two pivot axes are oriented generally at right-angles to one another.

Preferably, the first and fifth rotatable elements are each mounted in a respective support which is pivotally connected to the common support at the two pivot axes respectively. These supports may each carry a respective guard member which extends around at least part of the periphery of the third or sixth rotatable element, as the case may be.

Desirably, the power transmission joint further comprises a housing within which the rotatable elements and the support(s) are housed, which housing contains a lubricating fluid. The housing is preferably in the form of a flexible boot.

The rotatable elements conveniently are all in the form of gear wheels, such as bevel gears.

The invention will now be further described, by way of example only, with reference to the accompanying drawings in which:-

Figure 1 is a sectional view of a power transmission joint according to the present invention; and

Figure 2 is a view of the joint in the direction of arrow II in Figure 1 but with an outer cover thereof removed.

The illustrated power transmission joint comprises a power input shaft 10 on which is mounted a bevel gear 11 for rotation about an axis 12, a subsidiary output shaft 13 on which are mounted a pair of bevel gears 14 and 15 for rotation about a common axis 16, and a final output shaft 17 on which is mounted a bevel gear 18 for rotation about an axis 19. The gears 11 and 14 both mesh with a bevel gear 20 which is rotatable about an axis 21, the axes 12 and 16 of the gears 11 and 14 lying in a common plane which is perpendicular to the axis 21. Similarly, the gears 15 and 18 both mesh with a bevel gear 22 which is rotatable about an axis 23, the axes 16 and 19 of the gears 15 and 18 lying in a common plane which is perpendicular to the axis 23. The gears 20 and 22 are so arranged that their axes 21 and 23 are mutually perpendicular.

The input shaft 10 and the gear 11 are carried by a support 24 which comprises a journal block 25 through which the shaft 10 rotatably passes, and a part-cylindrical section 26 having a pair of generally triangular flanges 27 extending therefrom so as to embrace the gear 11. The flanges 27 have aligned holes 28 therein which receive a shaft 29 on which the gear 20 is mounted. A guard member 30 is secured over the part-cylindrical section 26 adjacent to one of the flanges 27 and has side flanges 31 which extend partly around the periphery of the gear 20 to protect the latter from damage.

A second support 32 carries the subsidiary output shaft 13 and its associated gears 14 and 15, and comprises a journal block 33 through which the shaft 13 rotatably passes. A pair of generally triangular flanges 34 project from one side of the journal block 33 so as to embrace the gear 14, and have therein aligned holes 35 in which the shaft 29 is received. The support 32 is thereby able to pivot relative to the support 24 about the shaft 29, so that the gear 14 can be angularly moved about the axis 21 to alter the angle between the input shaft 10 and the subsidiary output shaft 13. A pair of similar triangular flanges 36 project from the opposite

**0091251**

side of the journal block 33 so as to embrace the gear 15, and have aligned holes 37 therein which receive a shaft 38 on which the gear 22 is mounted. The flanges 36 are turned through 90$^\circ$ relative to the flanges 34 so that the shaft 38 is oriented at right-angles to the shaft 29.

A third support 39 carries the final output shaft 17 and its associated gear 18, and is of identical construction to the support 24, i.e. it comprises a journal block 40, a part-cylindrical section 41 and a pair of generally triangular flanges 42 having aligned holes 43 therein. These holes receive the shaft 38 so that the support 39 is able to pivot relative to the support 32, thereby enabling the gear 18 to be angularly moved about the axis 23 to vary the angle between the subsidiary output shaft 13 and the final output shaft 17. As with the support 24, the support 39 has a guard member 44 attached thereto adjacent one of the flanges 42 to protect the periphery of the gear 22.

The whole assembly described above is encased within a rubber boot 45 which is secured at its ends to the supports 24 and 39, respectively, and a lubricant is contained in the boot 45 to lubricate the various components of the joint in operation.

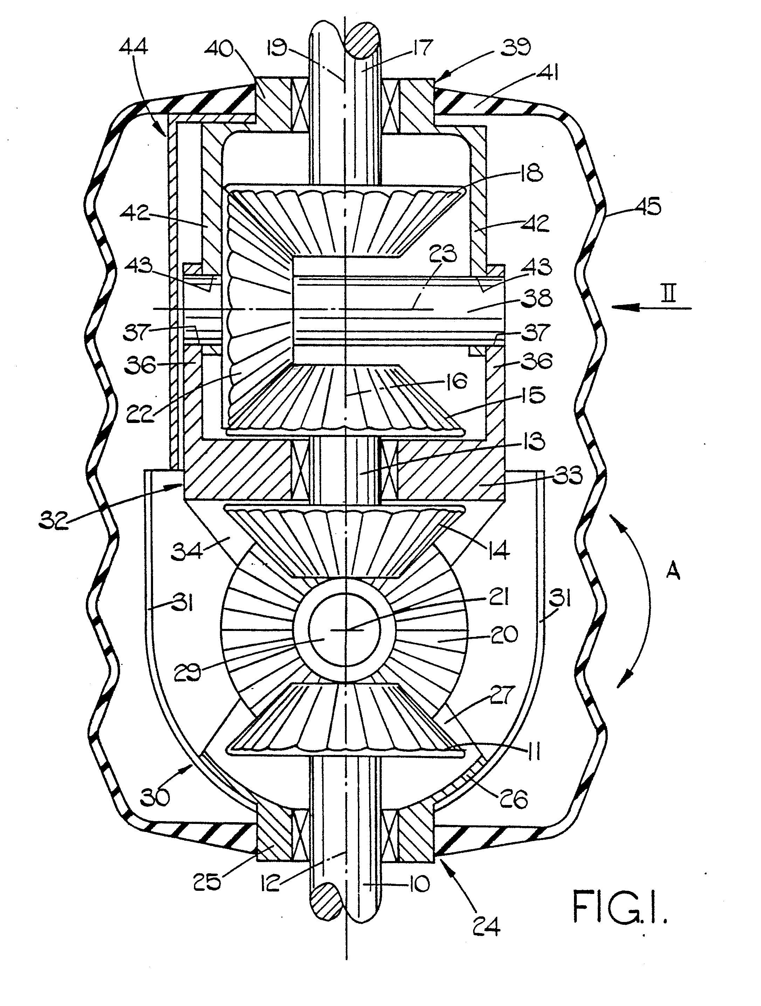

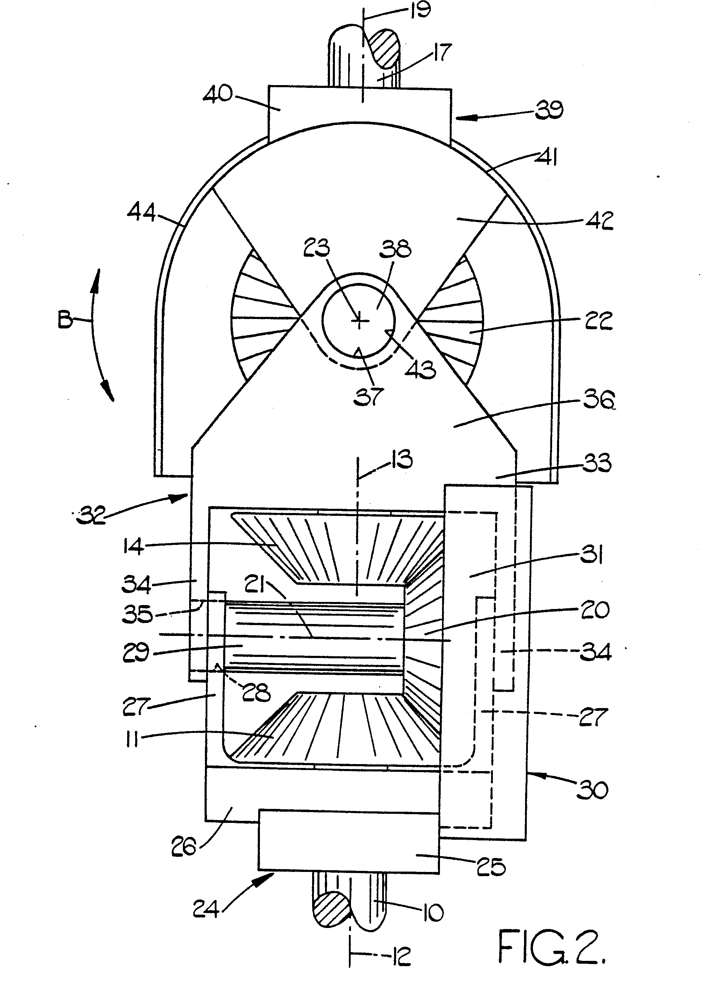

From the above description, it will be manifest that the subsidiary output shaft 13 can be angularly moved relative to the input shaft 10 about the axis 21 (i.e. in the direction of arrow A in Figure 1), and that the final output shaft 17 can in turn be angularly moved relative to the subsidiary output shaft 13 about the perpendicularly-orientated axis 23 (i.e. in the direction of arrow B in Figure 2), during which movement the various bevel gears remain in mutual drive-transmitting engagement. Thus, the final output shaft 17 can be moved universally into any desired orientation relative to the input shaft 10.

The power transmission joint has many and varied applications, some of which are a power-take off of an agricultural tractor, a four-wheel drive in articulated vehicles (such as dumper trucks, fork lift trucks and tractors), and a stern drive of power boats. Particularly in the last-mentioned application, a device may be included for effecting positive pivoting of the output shaft relative to the input shaft: in the illustrated construction, such a device could comprise a driven worm gear on the support 30 which meshes with a suitable configurated gear form on the support 39.

CLAIMS:

1. A power transmission joint comprising first and second rotatable elements (11,14) which are relatively angularly movable about a pivot axis (21) perpendicular to both of their rotation axes (12,16) and which are both in driving engagement with a third element (20) rotatable about said pivot axis (21), and fourth and fifth rotatable elements (15,18) which are relatively angularly movable about a further pivot axis (33) perpendicular to both of their rotation axes (16,19) and which are both in driving engagement with a sixth element (22) rotatable about said further pivot axis (23), the first and fifth rotatable elements (11,18) forming respectively a power input and a power output of the transmission joint and the second and fourth rotatable elements (14,15) being drivingly connected together characterised in that the second and fourth rotatable elements (14,15) are mounted on a common support (23) for rotation in unison about a common axis (16), and the two pivot axes (21,23) are oriented generally perpendicularly to one another.

2. A power transmission joint as claimed in claim 1, wherein the first and fifth rotatable elements (11,18) are each mounted on a respective support (24,39) which is pivotally connected to the common support (32) at the two pivot axes (21,23) respectively.

3. A power transmission joint as claimed in claim 2, wherein the support (24,39) for the first and fifth rotatable elements (11,18) each carry a respective guard member (30,44) which extends around at least part of the periphery of the third or sixth rotatable element (20,22), as the case may be.

4. A power transmission joint as claimed in claim 1, 2 or 3, further comprising a housing (45) within which the rotatable elements (11,14,20,15,18,22) and the common support (32) are housed, the housing (45) containing a lubricating fluid.

5. A power transmission joint as claimed in claim 4, wherein the housing is in the form of a flexible boot (45).

6. A power transmission as claimed in any preceding claim, wherein the rotatable elements (11,14,20,15,18,22) are all gear wheels, such as bevel gears.

0091251

FIG.I.

FIG. 2.